# EUROPÄISCHE PATENTSCHRIFT

(11) **EP 2 048 327 B1**
(45) Veröffentlichungstag und Bekanntmachung des Hinweises auf die Patenterteilung: **04.12.2013**
(21) Anmeldenummer: 07019667.0
(22) Anmeldetag: 08.10.2007
(51) Int. Cl.: F01D 11/00, F16J 15/32, F16J 15/44, F16J 15/12, F04D 29/10, F04D 29/12

(54) **Dichtungssystem für eine Turbomaschine**
Sealing system for a turbomachine
Système d'étanchéité pour turbomachine

(43) Veröffentlichungstag der Anmeldung: 15.04.2009
(73) Patentinhaber: Siemens Aktiengesellschaft, 80333 München (DE)
(72) Erfinder: Berendt, Oliver, 02826 Görlitz (DE)

(56) Entgegenhaltungen:
- DE-A1- 2 603 867
- GB-A- 544 732
- GB-A- 565 649
- US-A- 3 924 862
- US-A- 5 303 935
- US-A- 5 657 998
- US-A1- 2004 240 986

## Beschreibung

Die Erfindung betrifft ein Dichtungssystem für eine Turbomaschine zum Abdichten eines Ringspalts zwischen einem Rotor und einem Stator der Turbomaschine.

Eine Turbomaschine ist beispielsweise eine Dampfturbine, die einen Stator und einen Rotor aufweist, der von dem Stator umgeben ist. Der Rotor weist eine Welle und eine Mehrzahl von Laufschaufeln auf, die auf der Welle gruppiert als Laufschaufelstufen angebracht sind. Der Stator weist ein Gehäuse auf, an dem eine Mehrzahl von Leitschaufeln auf, die gruppiert als Leitschaufelstufen vorgesehen sind, wobei die Leitschaufelstufen mit den Laufschaufelstufen korrespondierend angeordnet sind.

Beim Betrieb der Dampfturbine wird Dampf über die Laufschaufelstufen und die Leitschaufelstufen entspannt, wodurch der Rotor drehangetrieben wird. Dadurch wird der Rotor bezogen auf den Stator relativ bewegt, so dass der Rotor an dem Stator anstreifen kann. Um das Anstreifen des Rotors an dem Stator möglichst zu unterbinden, ist an dem Umfang des Rotors ein Ringspalt zum Stator hin vorgesehen.

Beim Betrieb der Dampfturbine sind der Stator und der Rotor thermischen Belastungen und insbesondere der Rotor mechanischen Belastungen aufgrund von rotordynamischen Effekten und Dampfkräften ausgesetzt. Diese Belastungen können dazu führen, dass im Betrieb der Dampfturbine auf Grund von Deformation des Rotors und/oder des Stators der Ringspalt überbrückt wird, so dass der Rotor an dem Stator zumindest an einer Stelle anstreift.

Im Allgemeinen wird in der Dampfturbine entlang ihrer Längsrichtung der Druck des Dampfs abgebaut, wobei sich die Druckverhältnisse in den Ringspalt entsprechend fortpflanzen. Dadurch stellen sich insbesondere in Längsrichtung der Dampfturbine in dem Ringspalt entsprechende Druckgradienten ein, die zu einer Leckageströmung an Dampf führen. Die Leckageströmung bewirkt eine Absenkung des inneren Wirkungsgrads der Dampfturbine. Um dem entgegenzuwirken ist die Höhe des Ringspalts derart gewählt, dass einerseits der Ringspalt das zum sicheren Betrieb der Dampfturbine notwendige Spiel hat und andererseits die Leckageströmung durch den Ringspalt gering ist.

Zur Absenkung der Leckageströmung ist herkömmlich in dem Ringspalt eine Labyrinthdichtung eingebaut, die beispielsweise als Durchblicklabyrinth, Volllabyrinth, Stufenlabyrinth oder als Kamm-Nut Labyrinth ausgeführt sein kann.

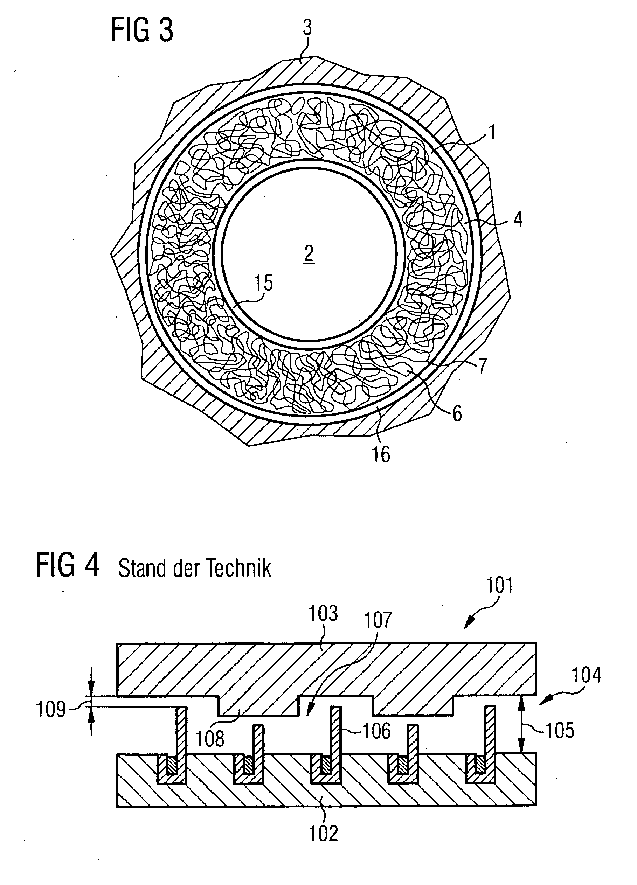

In Figur 4 ist eine herkömmliche Kamm-Nut Labyrinthdichtung 101 gezeigt. Zwischen einem Rotor 102 und einem Stator 103 ist ein Ringspalt 104 mit einer Spalthöhe 105 ausgebildet. In dem Ringspalt 104 angeordnet weist die Kamm-Nut Labyrinthdichtung 101 fünf hintereinander liegend angeordnete Dichtstreifen 106 auf, die jeweils aus einem Ringblech hergestellt sind. Die Dichtstreifen 106 sind in die Oberfläche des Rotors 102 derart eingewalzt, dass die Dichtstreifen 106 die Spalthöhe 105 bis auf ein Außenradialspiel 109 überbrücken. Die Oberfläche des Stators 103 ist mit Nuten 107 und dazwischen liegenden Stegen 108 versehen, wobei abwechselnd jeweils eine der Nuten 107 und einer der Stege 108 einem der Dichtstreifen 106 zugewandt angeordnet sind.

Ist die Kamm-Nut Labyrinthdichtung 101 in der Dampfturbine vorgesehen, so ist das Außenradialspiel 109 so bemessen, dass im Betrieb der Dampfturbine das Außenradialspiel 109 so gut wie nie von den Dichtstreifen 106 überbrückt wird. Eine Überbrückung des Außenradialspiels 109 kann beispielsweise dadurch verursacht werden, dass der Rotor 102 aufgrund von rotordynamischen Effekten beim Betrieb der Dampfturbine in Radialschwingen versetzt wird. Außerdem kann durch unterschiedliche schiedliche thermische Belastungen der Rotor 102 und der Stator 103 eine unterschiedliche thermische Ausdehnung haben, so dass während des Betriebs der Dampfturbine die Spalthöhe 105 sich verändern kann.

Sollte dennoch beim Betrieb der Dampfturbine mindestens einer der Dichtstreifen 106 die Oberfläche des Stators 103 berühren, so trägt sich dieser Dichtstreifen 106 in die Oberfläche des Stators 103 unter einer Materialabtragung ein. Dabei erwärmt sich der Dichtstreifen 106 durch Reibung, wodurch eine Veränderung des Materialgefüges in dem Dichtstreifen 106 eintreten kann. Dadurch kann die Festigkeit des Dichtstreifens 106 beeinträchtigt werden.

Die Leckagerate der Kamm-Nut Labyrinthdichtung 101 ist im Wesentlichen von dem Außenradialspiel 109 vorgegeben, da dieses den effektiven Querschnitt der Kamm-Nut Labyrinthdichtung 101 definiert. Je kleiner das Außenradialspiel 109 der Kamm-Nut Labyrinthdichtung 101 ist, desto höher ist die Leckagerate der Kamm-Nut Labyrinthdichtung 101. Anderseits, je größer das Außenradialspiel 109 der Kamm-Nut Labyrinthdichtung 101 ist, desto höher ist die Betriebssicherheit gegen Anstreifen der Kamm-Nut Labyrinthdichtung 101. Somit ist herkömmlich die Kamm-Nut Labyrinthdichtung 101 mit dem derartigen Außenradialspiel 109 versehen, bei dem die Kamm-Nut Labyrinthdichtung 101 eine ausreichende Betriebssicherheit hat, wobei hervorgerufen durch das Außenradialspiel 109 die Leckagerate der Kamm-Nut Labyrinthdichtung 101 sich ergibt.

In der GB 554,732 A ist eine Gummipackung beschrieben, die mit einem steifen Kern verstärkt ist, der mit einem mit Gummi getränkten Gewebe umgeben ist. Ferner ist aus DE 26 03 867 A1 eine Dichtungsringanordnung mit einem Dichtring bekannt, der zwischen einem inneren Stopfbuchsenteil und einem äußeren Stopfbuchsenteil dichtend angeordnet ist. Aus der US 5,303,935 A geht eine Flüssigkeitsdichtung hervor, die einen ringförmigen Körper aus einem elastomeren Material besteht, in das ein ebenfalls ringförmiges Verstärkungselement eingebettet ist. Ferner sind aus der US 2004/0240986 A1 und der US 5,657,998 A Dichtungen für Turbinen bekannt. Diese sind zwischen statischen Gehäuseteilen der jeweiligen Turbine angeordnet.

Aufgabe der Erfindung ist es ein wenig beschädigungsanfälliges Dichtungssystem für eine Turbomaschine zum Abdichten eines Ringraums zwischen einem Rotor und einem Stator der Turbomaschine zu schaffen, wobei das Dichtungssystem eine hohe Betriebssicherheit und eine geringe Leckagerate hat.

Das erfindungsgemäße Dichtungssystem für eine Turbomaschine zum Abdichten eines Ringspaltes zwischen einem Rotor und einem Stator der Turbomaschine weist einen in den Ringspalt einsetzbaren und diesen überbrückbaren Dichtungskörper, der elastisch ausgebildet ist und dadurch eine Höhenvariation des Ringspaltes ausgleichen kann, und mindestens einen Dichtungsring auf, der in dem Dichtungskörper eingebettet ist, so dass der Dichtungsring von dem Dichtungskörper in dem Ringspalt zwischen dem Rotor und dem Stator gehalten ist, wobei der Dichtungskörper aus einer Mehrzahl von Fasern besteht.

Der Ringspalt hat eine Spalthöhe, die von dem Abstand zwischen dem Stator und dem Rotor definiert ist. Da zwischen dem Stator und dem Rotor in dem Ringspalt der Dichtungsring angeordnet ist, versperrt der Dichtungsring den Ringspalt, so dass durch den Dichtungsring der effektive Querschnitt des Ringspalts verringert ist. Da annäherungsweise der effektive Querschnitt des Ringspalts direkt proportional zur Leckagerate des Dichtungssystems ist, wird durch die Anordnung des Dichtungsrings in dem Ringspalt zwischen dem Rotor und dem Stator eine Verringerung der Leckagerate des Dichtungssystems bewirkt.

Der Dichtungskörper ist elastisch ausgebildet, so dass er dadurch die Höhenvariation des Ringspalts ausgleichen kann. Die Höhenvariation kann beispielsweise durch einen rotordynamischen Effekt, bei dem der Rotor in Radialrichtung schwingt, und/oder eine unterschiedliche thermische Ausdehnung des Rotors und des Stators in Radialrichtung verursacht sein. Eine größtmögliche Höhenvariation des Ringspalts geht dann mit einem sicheren Betrieb der Turbomaschine einher, wenn an keiner Stelle in dem Ringspalt weder der Rotor noch der Stator den Dichtungsring berührt.

Aufgrund der elastischen Ausbildung des Dichtungskörpers ist der Dichtungsring innerhalb des Dichtungskörpers elastisch gelagert, wodurch der Dichtungsring in Radialrichtung beweglich angeordnet ist. Kommt es beim Betrieb der Turbomaschine zu einem Berühren des Dichtungsrings mit dem Rotor oder dem Stator, kann der Dichtungsring dem Rotor oder dem Stator ausweichen. Dadurch sind Kontaktkräfte, die an der Berührungsstelle des Dichtungsrings und des Rotors oder des Stators auftreten, schwach, wodurch eine Beschädigung des Dichtungssystems unterbunden ist. So ist beispielsweise der Materialabtrag beim Stator oder beim Rotor gering, der Abrieb des Dichtungsrings gering und die Erwärmung des Dichtungsrings gering. Somit braucht am Außendurchmesser und am Innendurchmesser des Dichtungsrings nur ein geringes Spiel zur Gewährleistung von ausreichender Betriebssicherheit vorgesehen zu werden. Dadurch hat das erfindungsgemäße Dichtungssystem bei gleicher Sicherheit im Betrieb der Turbomaschine eine geringere Leckagerate verglichen mit der herkömmlichen Labyrinthdichtung.

Die Fasern sind elastisch ausgebildet, die den Dichtungsring umgeben. Unter Nachgeben der Fasern ist der Dichtungsring innerhalb des Dichtungskörpers radialbeweglich angeordnet. Ein Teil der Fasern ist zwischen dem Dichtungsring und dem Rotor bzw. dem Stator angeordnet, so dass ein direkter Kontakt zwischen dem Dichtungsring und dem Rotor bzw. dem Stator unterbunden ist. Dadurch ist ein direktes Anstreifen des Dichtungsrings an dem Rotor oder dem Stator vorteilhaft unterbunden.

Ferner verkleinern die Fasern den effektiven Querschnitt des Ringspalts, so dass von den Fasern die Leckagerate des Dichtungssystems reduziert ist.

Es ist bevorzugt, dass die Struktur aus Mineralwolle gebildet ist und/oder die Fasern aus einem Polymer hergestellt sind.

In der Turbomaschine, beispielsweise wenn die Turbomaschine eine Dampfturbine ist, herrschen extreme thermodynamische Zustände. Somit ist das Dichtungssystem hohen Drücken und hohen Temperaturen ausgesetzt. Dadurch, dass die Struktur aus der Mineralwolle gebildet ist und/oder die Fasern aus einem Polymer hergestellt sind, ist die Struktur eingerichtet den hohen Drücken und den hohen Temperaturen zu widerstehen.

Es ist bevorzugt, dass der Dichtungsring in dem Ringspalt eine Radialerstreckung hat, die mindestens um das zweifache größer ist als seine Erstreckung in Axialrichtung des Rotors.

Dadurch ist der Dichtungsring in dem Dichtungskörper radial geführt, so dass eine Axialbewegung des Dichtungsrings eingeschränkt ist.

Es ist bevorzugt, dass der Innendurchmesser und/oder der Außerdurchmesser des Dichtungsrings so bemessen sind, dass, wenn das Dichtungssystem in die Turbomaschine eingebaut und der Dichtungsring konzentrisch um den Rotor in dem Ringspalt angeordnet ist, notwendige Radialspiele zwischen dem Rotor und dem Stator zum sicheren Betrieb der Turbomaschine eingehalten sind.

Dadurch ist die Turbomaschine sicher betreibbar, wobei die Radialspiele geringer zu sein brauchen als bei einer herkömmlichen Labyrinthdichtung. Somit hat das erfindungsgemäße Dichtungssystem bei einer vergleichbaren Betriebssicherheit mit einer herkömmlichen Labyrinthdichtung eine geringere Leckagerate.

Es ist bevorzugt, das das Dichtungssystem mindestens zwei Dichtungsringe aufweist, die in einem Axialabstand voneinander angeordnet sind, so dass, wenn das Dichtungssystem in die Turbomaschine eingebaut ist, die Dichtungsringe beim Betrieb der Turbomaschine sich gegenseitig nicht berühren.

Durch das Vorsehen von mehreren Dichtungsringen ist die Dichtwirkung des Dichtungssystems erhöht, so dass die Leckagerate des Dichtungssystems niedrig ist. Dadurch, dass die Dichtungsringe beim Betrieb sich nicht gegenseitig berühren können, können die Dichtungsringe sich gegenseitig nicht beschädigen oder behindern. Dadurch ist die Betriebssicherheit des Dichtungssystems hoch.

Bevorzugt ist der Dichtungsring aus einem Stahlblech oder einem Polymer hergestellt.

Das Stahlblech oder das Polymer weist eine hohe Festigkeit auf und ist einfach und kostengünstig in der Herstellung.

Es ist bevorzugt, dass das Dichtungssystem eine in dem Ringspalt auf dem Rotor anbringbare Rotorbeschichtung und/oder eine auf dem Stator anbringbare Statorbeschichtung aufweist, wobei die Oberfläche der Rotorbeschichtung und/oder der Statorbeschichtung eingerichtet ist, dass der Dichtungskörper entweder reibungsarm und verschleißarm über die Oberfläche gleitbar ist oder von der Oberfläche mitnehmbar ist.

Weist beispielsweise der Rotor die Rotorbeschichtung auf, die die Oberfläche hat, mit der der Dichtungskörper mitnehmbar ist, und der Stator die Statorbeschichtung auf, die die Oberfläche hat, an der der Dichtungskörper reibungsarm und verschleißarm gleitbar ist, so wird im Betrieb der Turbomaschine der Dichtungskörper von dem Rotor mitgenommen, so dass der Dichtungskörper relativ zu dem Stator sich mit der Drehgeschwindigkeit des Rotors bewegt und an der Statorbeschichtung entlang gleitet. Dadurch stellen sich vordefinierte Bewegungsverhältnisse in dem Dichtungssystem ein, so dass eine Beschädigung des Dichtungssystems durch unvorhergesehene Bewegungen unterbunden ist. Außerdem herrscht an der Statoroberfläche ein geringer Verschleiß, so dass der Dichtungskörper eine hohe Lebensdauer hat.

Bevorzugt ist die Rotorbeschichtung und/oder die Statorbeschichtung aus Polytetrafluorethylen hergestellt.

Vorteilhaft hat Polytetrafluorethylen einen geringen Reibwert und eine hohe Festigkeit. Ferner ist Polytetrafluorethylen hitzebeständig, so dass es einer hohen Temperaturbelastung standhalten kann.

Es ist bevorzugt, dass die Turbomaschine eine Dampfturbine, ein Verdichter oder eine Gasturbine ist.

Ist die Turbomaschine eine Gasturbine, so ist das Dichtungssystem bevorzugt im Bereich des Verdichters der Gasturbine vorgesehen.

Im Folgenden wird die Erfindung anhand eines bevorzugten Ausführungsbeispiels des erfindungsgemäßen Dichtungssystems anhand der beigefügten schematischen Zeichnungen erläutert.

Es zeigen:
- Figur 1: einen Längsschnitt des Ausführungsbeispiels des Dichtungssystems bei normaler Spalthöhe,
- Figur 2: den Längsschnitt aus Figur 1 bei verminderter Spalthöhe,
- Figur 3: einen Querschnitt des Ausführungsbeispiels des Dichtungssystems und
- Figur 4: eine herkömmliche Kamm-Nut Labyrinthdichtung.

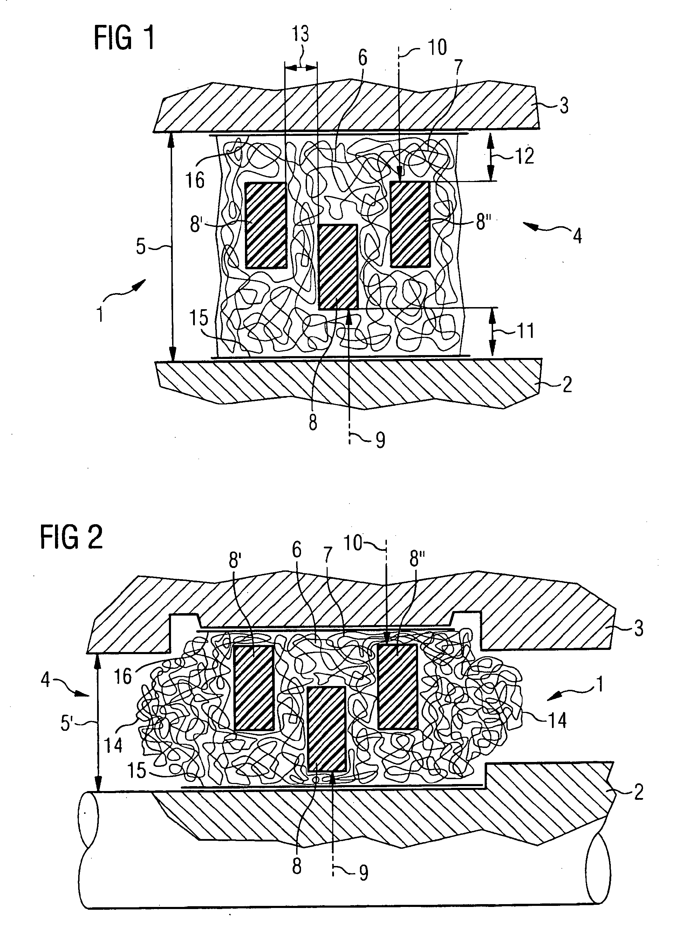

Wie es aus Figuren 1 bis 3 ersichtlich ist, ist ein Dichtungssystem 1 zwischen einem Rotor 2 und einem Stator 3 eingebaut. Zwischen dem Rotor 2 und dem Stator 3 erstreckt sich ein Ringspalt 4 mit einer Spalthöhe 5, die das Dichtungssystem 1 überbrückt, indem es in dem Ringspalt 4 eingebaut ist.

Das Dichtungssystem 1 weist einen Dichtungskörper 6 auf, der eine Struktur gebildet aus Fasern 7 aufweist. Die Fasern 7 sind biegeelastisch und haben einen ungeordneten Verlauf in dem Dichtungskörper 6. Somit ist der Dichtungskörper 6 als eine von den Fasern 7 nicht gewobene Struktur gebildet, die elastisch ist.

Ferner weist das Dichtungssystem 1 drei Dichtungsringe 8, 8', 8'' auf, die in dem Dichtungskörper 6 eingebettet sind. Die Dichtungsringe 8 sind in dem Ringspalt 4 konzentrisch um den Rotor 2 angeordnet. Die Dichtungsringe 8 haben jeweils einen Innendurchmesser 9 und einen Außendurchmesser 10. Der Innendurchmesser 9 ist derart bemessen, dass bei konzentrischer Lage des Dichtungsrings 8 der Innendurchmesser 9 zu dem Rotor 2 ein minimal notwendiges Innenradialspiel 11 hat. Ferner ist der Außendurchmesser 10 des Dichtungsrings 8 derart bemessen, dass der Abstand zwischen dem Außendurchmesser 10 und dem Stator 3 ein minimal notwendiges Außenradialspiel 12 hat. Das minimal notwendige Innenradialspiel 11 und das minimal notwendige Außenradialspiel 12 sind derart bemessen, dass unter normalen Betriebsbedingungen der Rotor 2 in dem Stator 3 rotierbar ist, ohne dass das Dichtungssystem 1 bei etwaigen radialen Bewegungen des Rotors 2 Schaden nimmt.

In Figuren 1 und 2 gesehen haben die Dichtungsringe 8' und 8'' im Wesentlichen den gleichen Außendurchmesser 10, wohingegen der Dichtungsring 8 einen kleineren Außendurchmesser 10 hat. Ferner haben die Dichtungsringe 8' und 8" im Wesentlichen den gleichen Innendurchmesser 9, wohingegen der Dichtungsring 8 einen kleineren Innendurchmesser 9 hat. Zur Schaffung des sicheren Betriebs des Dichtungssystems 1 ist der Innendurchmesser 9 des Dichtungsrings 8 unter Einhalten des minimal notwendigen Innenradialspiels 11 dimensioniert. Ferner ist der Außendurchmesser 10 des Dichtungsrings 8' und des Dichtungsrings 8'' derart dimensioniert, dass bei konzentrischer Position der Dichtungsringe 8', 8'' um den Rotor 2 das minimal notwendige Außenradialspiel 12 eingehalten ist.

Die Dichtungsringe 8, 8' und 8'' sind in einem Axialabstand 13 zueinander angeordnet, so dass beim Betrieb des Dichtungssystems 1 die Dichtungsringe 8, 8' und 8" sich nicht berühren.

In Figur 1 ist das Dichtungssystem 1 bei normaler Spalthöhe 5 des Ringspalts 4 dargestellt. In Figur 2 ist das Dichtungssystem 1 bei einer verminderten Spalthöhe 5' des Ringspalts 4 dargestellt. Dadurch, dass der Dichtungskörper 6 elastisch ausgebildet ist, ist der Dichtungskörper 6 von dem Rotor 2 und dem Stator 3 entsprechend um die Spalthöhenreduzierung von der Spalthöhe 5 zu der Spalthöhe 5' radial zusammengedrückt. Dies hat zur Folge, dass an den Stirnseiten des Dichtungskörpers 6 sich Ausbeulungen 14 entsprechend ausbilden.

Die Oberfläche des Rotors 2 ist mit einer Rotorbeschichtung 15 versehen, und die Oberfläche des Stators 3 ist mit einer Statorbeschichtung 16 versehen. Die Rotorbeschichtung 15 und die Statorbeschichtung 16 sind derart angeordnet, dass auf ihnen der Dichtungskörper 6 zum Liegen kommt. Die Rotorbeschichtung 15 ist derart eingerichtet, dass sie an der Kontaktstelle mit dem Dichtungskörper einen hohen Reibungskoeffizienten hat, indem die Rotorbeschichtung 15 an ihrer Oberfläche rau ausgebildet ist. Ferner ist die Statorbeschichtung 16 derart eingerichtet, dass sie an ihrer Kontaktstelle mit dem Dichtungskörper 6 einen geringen Reibungskoeffizienten hat, indem die Statorbeschichtung 16 an ihrer Oberfläche glatt ausgebildet ist. Somit wird bei der Rotation des Rotors 2 der Dichtungskörper 6 von der Rotorbeschichtung 15 mitgenommen, wobei der Dichtungskörper 6 verschleißarm an der Statorbeschichtung 16 gleitet.

## Patentansprüche

1. Dichtungssystem für eine Turbomaschine zum Abdichten eines Ringspalts (4) zwischen einem Rotor und einem Stator der Turbomaschine,
mit einem in den Ringspalt (4) einsetzbaren und diesen überbrückbaren Dichtungskörper (6),
der elastisch ausgebildet ist und dadurch eine Höhenvariation des Ringspalts (4) ausgleichen kann,
und mindestens einem Dichtungsring (8), der in dem Dichtungskörper (6) eingebettet ist,
so dass der Dichtungsring (8) von dem Dichtungskörper (6) in dem Ringspalt (4) zwischen dem Rotor (2) und dem Stator (3) gehalten ist, und der Dichtungskörper (6) eine Struktur gebildet aus Fasern (7) aufweist
**dadurch gekennzeichnet, dass** der Dichtungsring (8) innerhalb des Dichtungskörpers (6) in Radialrichtung beweglich angeordnet ist.

2. Dichtungssystem gemäß Anspruch 1,
wobei die Struktur aus Mineralwolle gebildet ist und/oder die Fasern (7) aus einem Polymer hergestellt sind.

3. Dichtungssystem gemäß einem der Ansprüche 1 oder 2,
wobei der Dichtungsring (8) im Ringspalt (4) eine Radialerstreckung hat, die mindestens um das zweifache größer ist als seine Erstreckung in Axialrichtung des Rotors (2).

4. Dichtungssystem gemäß einem der Ansprüche 1 bis 3,
wobei der Innendurchmesser (9) und/oder der Außendurchmesser (10) des Dichtungsrings (8) so bemessen sind, dass, wenn das Dichtungssystem (1) in die Turbomaschine eingebaut und der Dichtungsring (8) konzentrisch um den Rotor (2) in dem Ringspalt (4) angeordnet ist, notwendige Radialspiele (11, 12) zwischen dem Rotor (2) und dem Stator (3) zum sicheren Betrieb der Turbomaschine eingehalten sind.

5. Dichtungssystem gemäß einem der Ansprüche 1 bis 4,
wobei das Dichtungssystem mindestens zwei Dichtungsringe (8, 8', 8") aufweist, die in einem Axialabstand (13) voneinander angeordnet sind, dass, wenn das Dichtungssystem (1) in die Turbomaschine eingebaut ist, die Dichtungsringe (8, 8', 8") beim Betrieb der Turbomaschine sich gegenseitig nicht berühren.

6. Dichtungssystem gemäß einem der Ansprüche 1 bis 5,
wobei der Dichtungsring (8) aus einem Stahlblech oder einem Polymer hergestellt ist.

7. Dichtungssystem gemäß einem der Ansprüche 1 bis 6, wobei das Dichtungssystem (1) eine in dem Ringspalt (4) auf den Rotor (2) anbringbare Rotorbeschichtung (15) und/oder eine in dem Ringspalt (4) auf den Stator (3) anbringbare Statorbeschichtung (16) aufweist,
wobei die Oberfläche der Rotorbeschichtung (15) und/oder der Statorbeschichtung (16) so eingerichtet sind, dass der Dichtungskörper (6) entweder reibungsarm und verschleißarm über die Oberfläche gleitbar ist oder von der Oberfläche mitnehmbar ist.

8. Dichtungssystem gemäß Anspruch 7,
wobei die Rotorbeschichtung (15) und/oder die Statorbeschichtung (16) aus Polytetrafluorethylen hergestellt ist.

9. Dichtungssystem gemäß einem der Ansprüche 1 bis 8,
wobei die Turbomaschine eine Dampfturbine, ein Verdichter oder eine Gasturbine ist.

## Claims

1. Sealing system for a turbomachine for sealing an annular gap (4) between a rotor and a stator of the turbomachine, having a sealing body (6) which can be inserted into the annular gap (4) and can bridge the same,
with said sealing body (6) being embodied elastically and thereby being able to compensate for a height variation of the annular gap (4),
and having at least one sealing ring (8) which is embedded in the sealing body (6)
such that the sealing ring (8) is held by the sealing body (6) in the annular gap (4) between the rotor (2) and the stator (3), and the sealing body (6) has a structure that is formed from fibres (7),
**characterised in that** the sealing ring (8) is disposed inside the sealing body (6) so as to be movable in the radial direction.

2. Sealing system according to claim 1,
wherein the structure is formed from mineral wool and/or the fibres (7) are manufactured from a polymer.

3. Sealing system according to one of claims 1 or 2,
wherein the sealing ring (8) has a radial extension in the annular gap (4) which is at least two times greater than its extension in the axial direction of the rotor (2).

4. Sealing system according to one of claims 1 to 3,
wherein the inner diameter (9) and/or the outer diameter (10) of the sealing ring (8) are dimensioned such that when the sealing system (1) is installed in the turbomachine and the sealing ring (8) is arranged concentrically around the rotor (2) in the annular gap (4), necessary radial clearances (11, 12) between the rotor (2) and the stator (3) are maintained to assure the reliable operation of the turbomachine.

5. Sealing system according to one of claims 1 to 4,
wherein the sealing system has at least two sealing rings (8, 8', 8") which are disposed at an axial distance (13) from one another such that when the sealing system (1) is installed in the turbomachine the sealing rings (8, 8', 8") do not touch one another during operation of the turbomachine.

6. Sealing system according to one of claims 1 to 5,
wherein the sealing ring (8) is manufactured from sheet steel or from a polymer.

7. Sealing system according to one of claims 1 to 6,
wherein the sealing system (1) has a rotor coating (15) which can be applied to the rotor (2) in the annular gap (4) and/or a stator coating (16) which can be applied to the stator (3) in the annular gap (4),
wherein the surface of the rotor coating (15) and/or of the stator coating (16) are/is embodied in such a way that the sealing body (6) can either slide over the surface in a low-friction and low-wear manner or can be entrained by the surface.

8. Sealing system according to claim 7,
wherein the rotor coating (15) and/or the stator coating (16) are/is manufactured from polytetrafluoroethylene.

9. Sealing system according to one of claims 1 to 8, wherein the turbomachine is a steam turbine, a compressor or a gas turbine.

## Revendications

1. Système d'étanchéité pour une turbomachine destiné à rendre étanche un interstice annulaire (4) entre un rotor et un stator de la turbomachine,
comportant un corps d'étanchéité (6) qui peut être disposé dans l'interstice annulaire (4) et le garnir,
lequel corps est réalisé de manière élastique et peut ainsi compenser une variation en hauteur de l'interstice annulaire (4),
et au moins une bague d'étanchéité (8), qui est intégrée dans le corps d'étanchéité (6),
de sorte que la bague d'étanchéité (8) est maintenue par le corps d'étanchéité (6) dans l'interstice annulaire (4) entre le rotor (2) et le stator (3), et le corps d'étanchéité (6) présente une structure formée par des fibres (7),
**caractérisé en ce que** la bague d'étanchéité (8) est agencée à l'intérieur du corps d'étanchéité (6) dans la direction radiale de manière à être mobile.

2. Système d'étanchéité selon la revendication 1,
dans lequel la structure est formée par de la laine minérale et/ou les fibres (7) sont fabriquées en polymère.

3. Système d'étanchéité selon l'une des revendications 1 ou 2,
dans lequel la bague d'étanchéité (8) dans l'interstice annulaire (4) a une étendue radiale qui est au moins deux fois plus grande que son étendue dans la direction axiale du rotor (2).

4. Système d'étanchéité selon l'une des revendications 1 à 3, dans lequel le diamètre interne (9) et/ou le diamètre externe (10) de la bague d'étanchéité (8) sont dimensionnés de sorte que lorsque le système d'étanchéité (1) est installé dans la turbomachine et la bague d'étanchéité (8) est agencée de manière concentrique autour du rotor (2) dans l'interstice annulaire (4), les jeux radiaux (11, 12) nécessaires entre le rotor (2) et le stator (3) pour un fonctionnement plus sécurisé de la turbomachine sont respectés.

5. Système d'étanchéité selon l'une des revendications 1 à 4, dans lequel le système d'étanchéité présente au moins deux bagues d'étanchéité (8, 8', 8") qui sont agencées selon un espacement axial (13) entre elles, de sorte que lorsque le système d'étanchéité (1) est installé dans la turbomachine, les bague d'étanchéité (8, 8', 8") ne sont pas en contact mutuel lorsque la turbomachine est en fonctionnement.

6. Système d'étanchéité selon l'une des revendications 1 à 5, dans lequel la bague d'étanchéité (8) est fabriquée en tôle d'acier ou en polymère.

7. Système d'étanchéité selon l'une des revendications 1 à 6, dans lequel le système d'étanchéité (1) présente un revêtement de rotor (15) pouvant être appliqué dans l'interstice annulaire (4) sur le rotor (2) et/ou un revêtement de stator (16) pouvant être appliqué dans l'interstice annulaire (4) sur le stator (3),
dans lequel la surface du revêtement de rotor (15) et/ou du revêtement de stator (16) est mise en place de sorte que le corps d'étanchéité (6) peut soit glisser avec un faible frottement et une faible usure sur la surface soit être entraîné par la surface.

8. Système d'étanchéité selon la revendication 7,
dans lequel le revêtement de rotor (15) et/ou le revêtement de stator (16) sont fabriqués en polytétrafluoroéthylène.

9. Système d'étanchéité selon l'une des revendications 1 à 8,
dans lequel la turbomachine est une turbine à vapeur, un compresseur ou une turbine à gaz.
